# EUROPEAN PATENT APPLICATION

(11) **EP 4 184 769 A1**
(43) Date of publication of application: **24.05.2023**
(21) Application number: 21209694.5
(22) Date of filing: 22.11.2021
(51) Int. Cl.: H02M 1/00, H02M 1/08, H02M 3/07, H02M 7/483, H02M 7/487

(54) **POWER CONVERTER SYSTEM**

(71) Applicant: Hyper Poland Electro S.A., 03-828 Warsaw (PL)
(72) Inventor: MICHALCZUK, Marek, 05-800 Pruszków (PL); NIKONIUK, Marcin, 02-776 Warszawa (PL); PRUSACZYK, Krzysztof, 68-100 Zagan (PL)
(74) Representative: reuteler & cie SA

(57) **Abstract**

A power converter system (1) comprising a DC voltage source (Udc), a control system (3), a multilevel inverter (5) and a balancing circuit (2) connected to the DC voltage source (Udc), and at least two DC link series connected capacitors (C1, C2) connected between a positive and a negative voltage supply line (V+, V-) of the DC voltage source (Udc) and having a mid-point (4) therebetween. The balancing circuit comprises a plurality of switches (T1, T2, T3, T4) that are connected in series between said positive and a negative voltage supply line (V+, V-), the plurality of switches arranged in a first pair of switches (T1, T2) and a second pair of switches (T3, T4), a flying capacitor (C3) connected between a mid point (5) of the first pair of switches (T1, T2) and a mid point (6) of the second pair of switches (T3, T4), and an inductor (L) connected between said DC link capacitor mid point (4) and a mid point (7) between the first pair of switches (T1, T2) and second pair of switches (T3, T4). The control system (3) comprises a cascaded control loop including a first control path (8) receiving DC link capacitor voltages (UC1, UC2) as input and outputting a current control signal (Ti), and a second control path receiving a flying capacitor voltage (UC3) as input and outputting a voltage control signal (Tu), the current control signal and voltage control signal being input into a switch control circuit (14) of the control system for controlling operation of the switches of the balancing circuit.

## Description

The present invention relates to a power converter system having a multi-level inverter with auxiliary balancing circuit.

Compared to the more common two-level inverters, multi-level power inverters in electric drive application provide lower harmonic content of the stator current, higher efficiency, lower requirements for transistor blocking voltage, better loss distribution, and lower requirements for AC output filter. Neutral-point-clamped (NPC) inverters are the most widely used topology of multi-level inverters in high-power applications. In three-level topology the input DC circuit is divided into two parts with a neutral point NP situated between two link capacitors, whereby the best performance of the inverter is achieved with balanced voltages in the DC circuit.

The downsides of multi-level inverters compared to two-level inverters include a higher cost of the components and voltage unbalances in the DC link capacitors especially for operation with high reactive loads, however multi-level inverters are more suitable for numerous applications because of their relatively low THD (total harmonic distortion) coefficient in the output current, reduced switching losses, and lower requirements for transistor blocking voltage.

There are various known techniques to maintain the DC voltages balanced which can be divided into two categories. The first includes dedicated modulation algorithms, and the second includes additional hardware equipment. The drawback of modulation methods it that they have a limited range of effective operation, in particular they are not very effective for operation at high output voltage. The drawback of using additional hardware to balance DC voltages is the increased complexity and cost of the system.

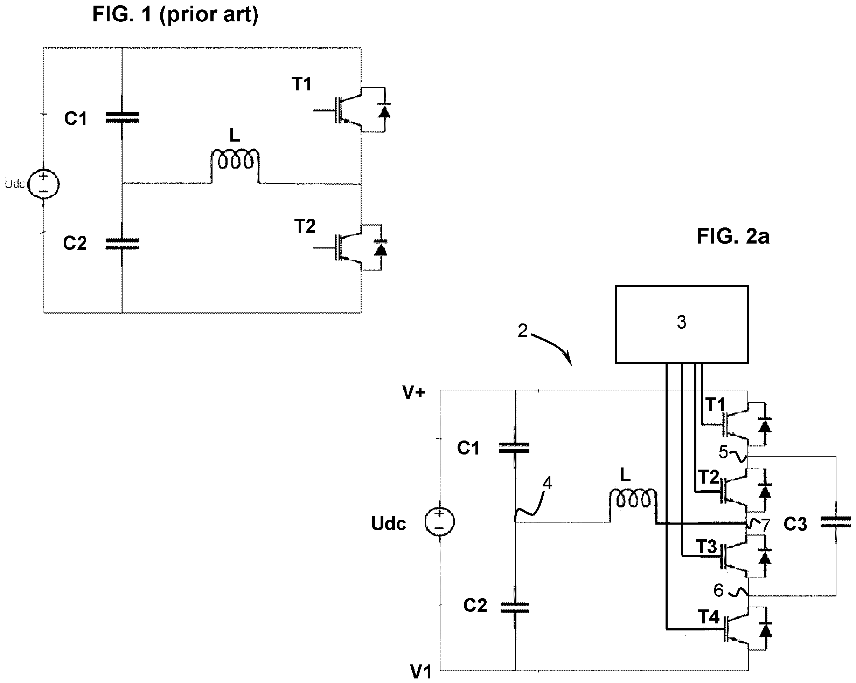

A known topology of the balancer for a three level NPC inverter is presented in Fig. 1. The main disadvantage of this topology is relatively high current ripples.

An object of the invention is to provide a power converter system with a multi-level inverter and balancing circuit for high power operations that has a stable current output and that is economical to produce and operate.

It is advantageous to provide a power converter system that is robust and reliable.

It is advantageous to provide a power converter system that is easy to drive.

Objects of the invention have been achieved by providing a multi-level inverter according to claim 1.

Disclosed herein is a power converter system comprising a DC voltage source (Udc), a control system, a multilevel inverter and a balancing circuit connected to the DC voltage source (Udc), and at least two DC link series connected capacitors (C1, C2) connected between a positive and a negative voltage supply line (V+, V-) of the DC voltage source (Udc) and having a mid-point therebetween. The balancing circuit comprises a plurality of switches (T1, T2, T3, T4) that are connected in series between said positive and a negative voltage supply line (V+, V-), the plurality of switches arranged in a first pair of switches (T1, T2) and a second pair of switches (T3, T4), a flying capacitor (C3) connected between a mid point of the first pair of switches (T1, T2) and a mid point of the second pair of switches (T3, T4), and an inductor (L) connected between said DC link capacitor mid point and a mid point between the first pair of switches (T1, T2) and second pair of switches (T3, T4).

The control system comprises a cascaded control loop including a first control path receiving DC link capacitor voltages (UC1, UC2) as input and outputting a current control signal (Ti), and a second control path receiving a flying capacitor voltage (UC3) as input and outputting a voltage control signal (Tu). The current control signal and voltage control signal are input into a switch control circuit of the control system for controlling operation of the switches of the balancing circuit.

In an advantageous embodiment, the control system further comprises a compensation circuit arrangement receiving a positive voltage control signal (Tup) and a negative voltage control signal (Tun) from the second control path, the compensation circuit arrangement configured to generate a compensation control signal (Tx) for input into the switch control circuit.

In an advantageous embodiment, the second control path comprises a first saturation block (L1) and second saturation block (L2) receiving the voltage control signal (Tu), the first saturation block having a lower limit of 0 and an upper limit of a fixed positive value and the second saturation having an upper limit of 0 and a lower limit of a fixed negative value, the first saturation block outputting a positive compensation voltage control signal (Tup) and the second saturation block outputting a negative compensation voltage control signal (Tun), said positive and negative compensation signals input into the compensation circuit arrangement.

In an advantageous embodiment, the switch control circuit comprises a subtraction block into which the current control signal (Ti) and voltage control signal (Tu) are added and the compensation control signal (Tx) is subtracted, and a subtraction block, into which the current control signal (Ti) is added and the voltage control signal (Tu) and compensation control signal (Tx) are subtracted.

In an advantageous embodiment, a reference mean value is inputted in both subtraction blocks.

In an advantageous embodiment, the gate control circuit further comprises a first comparator (Co1) comparing the output of one of the subtraction blocks with a first PWM carrier signal (W1) and a second comparator (Co2) comparing the output of the other subtraction block with a second PWM carrier signal (W2).

In an advantageous embodiment, the PWM carrier signals have the same frequency and amplitude, and have substantially triangular waveforms, whereby the first carrier signal (W1) is 180° phase shifted from the second PWM carrier signal (W2).

In an advantageous embodiment, the switches are transistors and the output of the comparators (Co1, Co2) constitute transistor gate input signals.

In an advantageous embodiment, the multi-level inverter is a three-level inverter.

Further objects and advantageous features of the invention will be apparent from the claims, from the detailed description, and annexed drawings, in which:
Figure 1 is a schema of a prior art balancing circuit for a three-level inverter circuit;
Figure 2a is a schema of a balancing circuit for a three-level inverter circuit of a power converter system according to an embodiment of the invention;
Figure 2b is a schema of a power converter system with a three-level inverter and a balancing circuit according to an embodiment of the invention;
Figures 3a to 3d illustrate control systems of a balancing circuit of a power converter system according to embodiments of the invention;
Figures 4a and 4b show plots, over time, of balancing circuit signals : (a) transistor switching signals (circuit modulation signals) and (b) circuit voltage and current signals (Uc3 voltage across the flying capacitor C3, I_L current through inductor L, Ic3 current flowing into flying capacitor C3) while Ti=Tu=Tx=0 according to embodiments of the invention;
Figures 5a and 5b show plots similar to figures 4a and 4b while Ti>0, Tu=Tx=0;
   Figures 6a and 6b show plots similar to figures 4a and 4b while Ti<0, Tu=Tx=0;

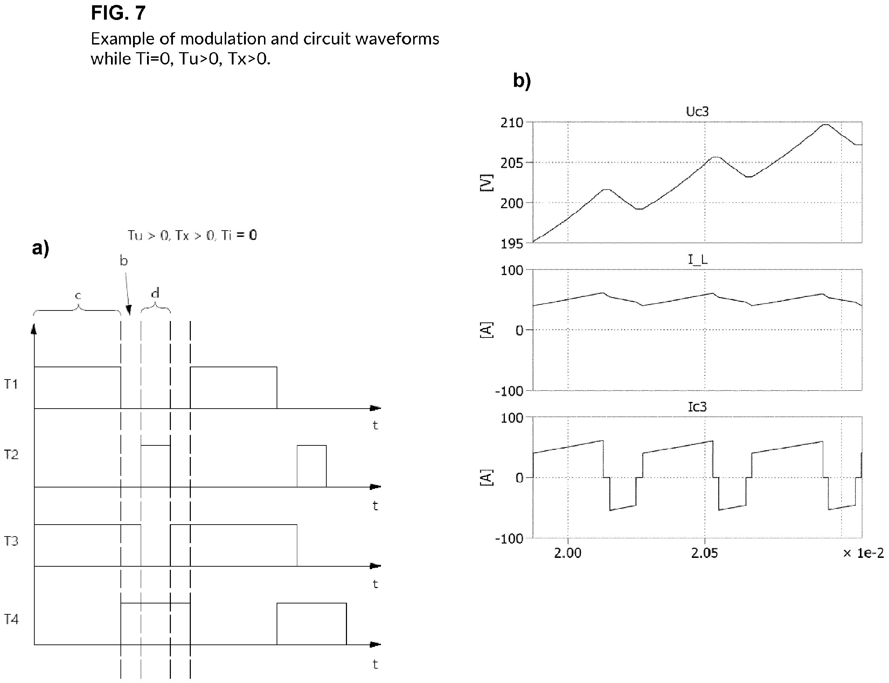

   Figures 7a and 7b show plots similar to figures 4a and 4b while Ti=0, Tu>0, Tx>0;

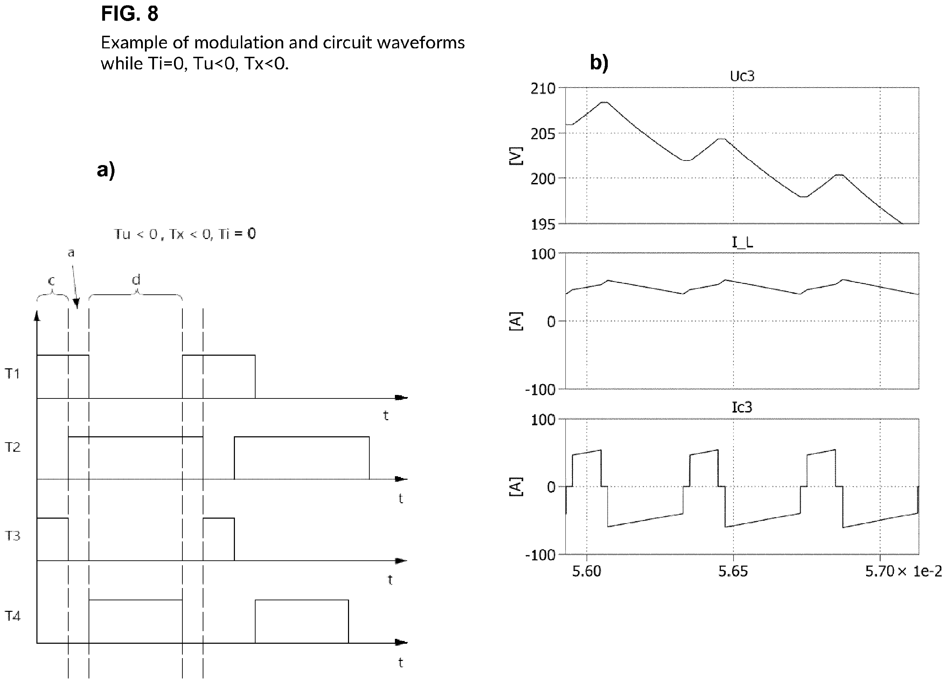

   Figures 8a and 8b show plots similar to figures 4a and 4b while Ti=0, Tu<0, Tx<0;
Figures 9a and 9b show a portion of the circuit of figure 2a illustrating a flow of current in the circuit (in both directions across the inductor L) during a first state identified in the plots of figure 4a-8a as state ***a*;**
   Figures 10a and 10b are similar to figures 9a and 9b during a second state identified as state ***b***;
   Figures 11a and 11b are similar to figures 9a and 9b during a third state identified as state ***c*;**
   Figures 12a and 12b are similar to figures 9a and 9b during a fourth state identified as state ***d***;
Figure 13 show plots, over time, of balancing circuit voltage and current signals: Uc3 voltage across the flying capacitor C3, Current flowing out of DC link midpoint, I_L current through inductor L, Uc1 voltage across the first DC link capacitor C1, Uc2 voltage across the second DC link capacitor C2, I_L current through inductor L) according to embodiments of the invention;
Figure 14 show plots, over time, of circuit voltage and current signals similar to figure 13 but using a conventional (prior art) control system;
Figure 15 shows waveforms of PWM carrier signals of a gate control circuit of a multi-level inverter drive according to embodiments of the invention.

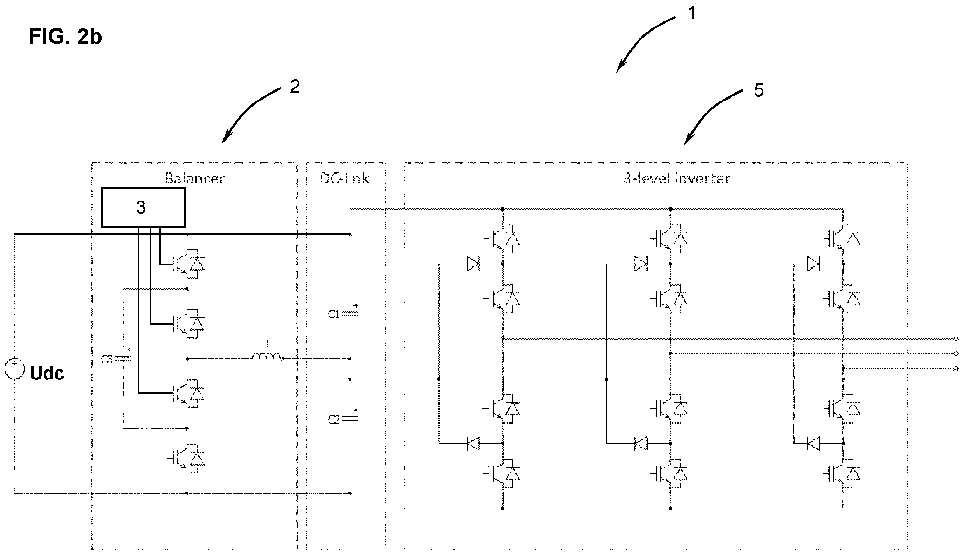

Referring to the figures, starting with figure 2a, 2b, a power converter system 1 according to embodiments of the invention comprises a multi-level inverter circuit 3, a balancing circuit 2, and a control circuit 4 connected to balancing circuit 2.

The power converter system 1 in the illustrated embodiment of figure 2b comprises a three-level inverter circuit 5 with a balancing circuit 2, comprising a DC voltage source Udc, and first and second series connected DC link capacitors C1, C2 connected between the plus and minus poles of the DC voltage source.

The balancing circuit 2 comprises a first pair of switches T1, T2 and a second pair of switches T3, T4 connected in series between the plus and minus poles of the DC voltage source, a flying capacitor C3 connected between a mid point 5 of the first pair of switches T1, T2 and a mid point 6 of the second pair of switches T3, T4, and an inductor L connected between a mid point 4 between the DC link capacitors C1, C2 and a mid point 7 between the first pair of switches T1, T2 and second pair of switches T3, T4.

The switches are formed by transistors, the gate (i.e. base) of each transistor being connected to the control circuit 3. Each transistor comprises a diode interconnecting the emitter side of transistor to the collector side of the transistor, the diode anode connected to the emitter and the diode cathode connected to the collector, configured for current flow allow discharging of capacitors when the transistor switch is open (off).

The mid point 4 of the DC link capacitors forms a neutral point (NP) for the three-level inverter 5.

The control circuit 3 comprises a cascaded control loop comprising a first control path 8 and a second control path 10 configured to maintain the DC link capacitor voltages balanced. It may be noted that with a non-cascaded single control loop, optimal balanced operation of inverter circuit is very difficult because the voltage on the flying capacitor C3 tends to be unstable. To solve this problem, a second control path is applied. The parallel second control path 10 maintains the voltage on the flying capacitor C3 constant but does not affect the control process carried out in the first control path 8.

The first control path 8 (current control loop) comprises a first subtraction block D1, a DC link voltages difference proportional-integral controller R1 receiving an output of the first subtraction block, a second subtraction block D2, and an inductor current proportional-integral controller R2 outputting a current control signal *Ti .* In the first control path 8, the voltages *Uc1, Uc2* across the first and second link capacitors C1, C2 respectively are input into a first subtraction block D1 to calculate a difference between the voltages that is input into the DC link voltages difference proportional-integral controller R1 which outputs the result to the second subtraction block D2. A value of the inductor current *i_L* is input in the second subtraction block which outputs the difference into the inductor current proportional-integral controller R2 to calculate the current control signal *Ti .*

The second control path 10 (voltage control loop) comprises a third subtraction block D3, a flying capacitor voltage proportional-integral controller R3 receiving an output of the third subtraction block, and a first multiplication block M1 receiving the output of the flying capacitor voltage proportional-integral controller R3 and outputting a voltage control signal *Tu.* In the second control path 10, the voltage *Uc3* across the flying capacitor C3 and a reference voltage *Ue3_ref* respectively are input into the third subtraction block D3 to calculate a difference between the voltages that is input into the flying capacitor voltage proportional-integral controller R3 which outputs the result to the first multiplication block M1. An absolute value of the inductor current *i_L* (corrected for sign to remain positive via a sign correction block S1), is input in the multiplication block M1 which outputs the product of the value of the inductor current *i_L* and of the output of the flying capacitor voltage proportional-integral controller R3 to form the voltage control signal *Tu.*

The second control path 10 further comprises a first saturation block L1 and second saturation block L2 receiving an output of the first multiplication block M1, namely the voltage control signal *Tu.* The first saturation block L1 has a lower limit of 0 and an upper limit of a fixed positive value e.g. 1 and the second saturation block L2 has an upper limit of 0 and a lower limit of a fixed negative value e.g. -1 . The first saturation block L1 outputs a positive compensation voltage control signal *Tup* and second saturation block L2 outputs a negative compensation voltage control signal *Tun.* At least one of the saturation blocks, for instance the second saturation block L2, may be further connected to an amplifier A1 to invert the corresponding compensation voltage control signal (the gain of A1 is -1).

The control circuit 3 further comprises a compensation circuit arrangement 12 to generate a compensation control signal *Tx* which seeks to adjust correction of voltage imbalances taking into account the differences between the voltages of the DC link capacitors and the flying capacitor. The compensation control signal *Tx* allows to maintain the desired average value of the choke current in a given switching cycle. This parameter is useful because it compensates the influence of the compensation voltage control signal *Tu* on the average value of the inductor current *i_L.*

The compensation circuit arrangement 12 comprises a fourth subtraction block D4 and a fifth subtraction block D5, the fourth subtraction block outputting a difference between the first link capacitor voltage *Uc1* and the flying capacitor voltage *Uc3* which is fed into a first division block V1, and the fifth subtraction block outputting a difference between the second link capacitor voltage *Uc2* and the flying capacitor voltage *Uc3* which is fed into a second division block V2. The first division block V1 divides the first difference with the second link capacitor voltage Uc2 and the second division block V2 divides the second difference with the first link capacitor voltage *Uc1.* The output of the first division block V1 is fed into a second multiplication block M2 and multiplied with the positive compensation voltage control signal *Tup,* and the output of the second division block V2 is fed into a third multiplication block M3 and multiplied with the negative compensation voltage control signal *Tun.* The outputs of the second and third multiplication blocks M2, M3 are fed into a sixth subtraction block D6 to calculate a difference that forms the compensation signal *Tx.*

The control circuit 3 further comprises a transistor gate input circuit arrangement 14 to generate control signals *T1control, T2control, T3control, T4control* for controlling the switching of transistor switches T1, T2, T3, T4 respectively. The transistor gate input circuit arrangement 14 comprises a seventh subtraction block D7 and an eighth subtraction block D8, into which the current control signal *Ti,* voltage control signal *Tu* and compensation control signal *Tx* are inputted. In the seventh subtraction block D7, the current control signal *Ti* and voltage control signal *Tu* are added and the compensation control signal *Tx is* subtracted. In the eighth subtraction block D8, the current control signal *Ti* is added and the voltage control signal *Tu* and compensation control signal *Tx* are subtracted. A reference mean value, for instance a mean value between switch control values 0 and 1 (i.e. 0.5), may be added in both subtraction blocks D7, D8 so that the signal oscillates about the mean value. The transistor gate input circuit arrangement 14 further comprises a first comparator Co1 comparing the output of the seventh subtraction block D7 with a first PWM (pulse width modulated) carrier signal *W1* and a second comparator Co2 comparing the output of the eighth subtraction block D8 with a second PWM (pulse width modulated) carrier signal *W2.* The PWM carrier signals have the same frequency and amplitude, and may preferably have substantially triangular waveforms, whereby the first carrier signal *W1* is 180° phase shifted from the second PWM carrier signal *W2.* The output of the comparators Co1, Co2 constitute the transistor switching control signals which may substantially correspond to a binary output signal of either switch ON or switch OFF.

The control signal *T1control* of the first transistor switch T1 and the control signal *T4control* of the fourth transistor switch T4 are outputted by the first comparator Co1, whereby the control signals of one transistor is opposed to the control signal of the other transistor by a first negation block N1, and the control signal *T2control* of the second transistor switch T2 and the control signal *T3control* of the third transistor switch T3 are outputted by the second comparator Co2, whereby the control signals of one transistor is opposed to the control signal of the other transistor by a second negation block N2.

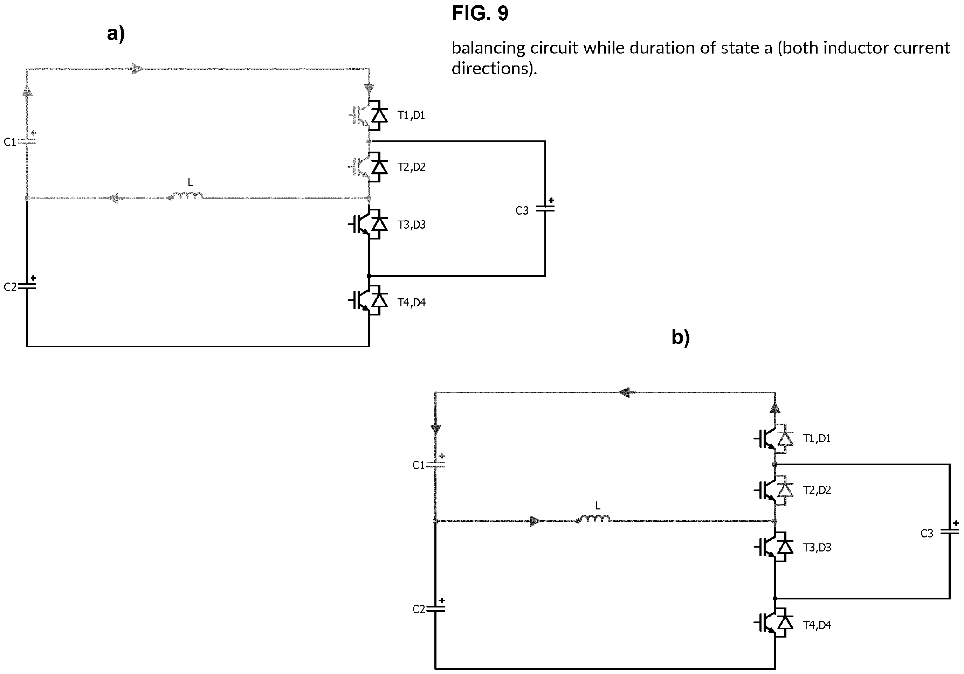

It is possible to control both the DC link capacitor C1, C2 voltages and the flying capacitor C3 voltage using four switching states illustrated in figures 9 to 12.

In a first state, *state a* , illustrated in figures 9a and 9b (showing both current directions), both first and second transistor switches T1 and T2 of the first pair are ON (the other switches T3, T4 being off), the voltage across the inductor L equals the voltage UC1 of the first DC link capacitor C1, and the current *Ic3* flowing into the flying capacitor C3 is zero. That means the inductor current *IL* is rising and the flying capacitor voltage UC3 is not changing.

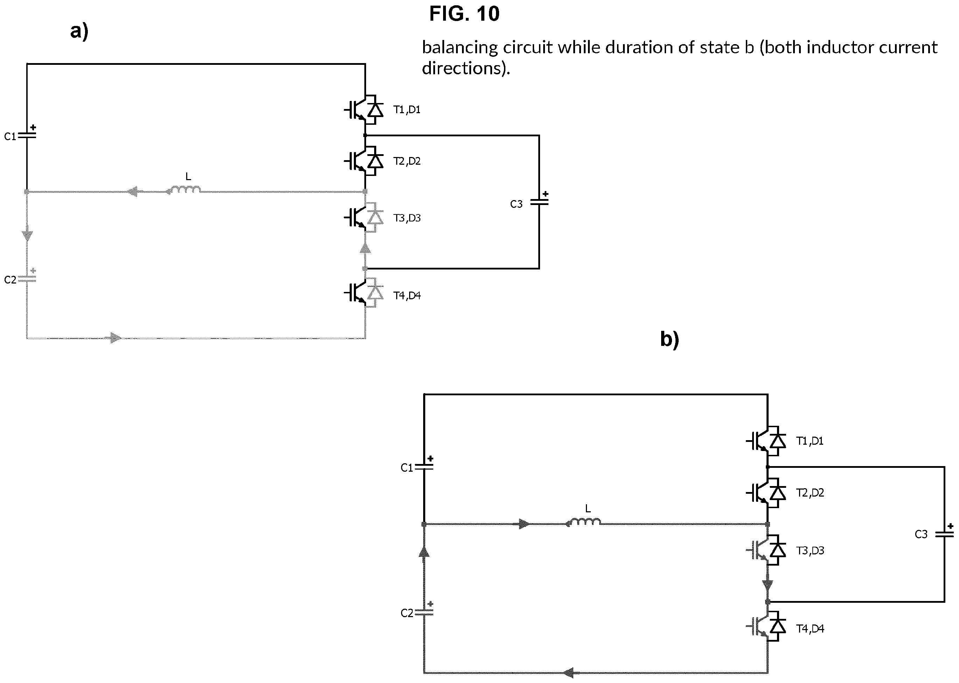

Similarly in *state b*, illustrated in figures 10a and 10b (showing both current directions), both third and fourth transistor switches T3 and T4 of the second pair are ON (the other switches T1, T2 being off), the voltage across the inductor L equals the voltage UC2 of the second DC link capacitor C2, and the current *Ic3* flowing into the flying capacitor C3 is zero.

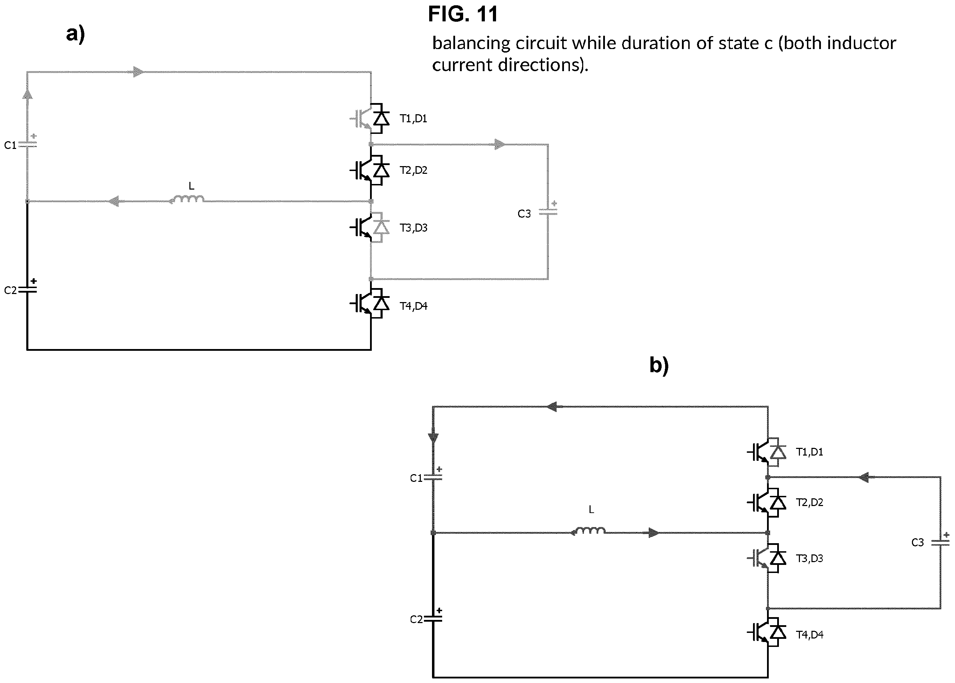

In *state c*, illustrated in figures 11a and 11b, (showing both current directions) first switch T1 and third switch T3 of the first and second transistor pair respectively are ON (the other switches T2, T4 being off), the voltage across the inductor L equals the difference between the first DC link capacitor voltage UC1 and the flying capacitor voltage *UC3* (*UC1*¬ - *UC3),* and the flying capacitor current IC3 equals the inductor current *IL.* That means the inductor current *IL* is rising and the flying capacitor C3 is charging for a positive inductor current *IL* (figure 11a) and discharging for a negative inductor current *IL* (figure 11b).

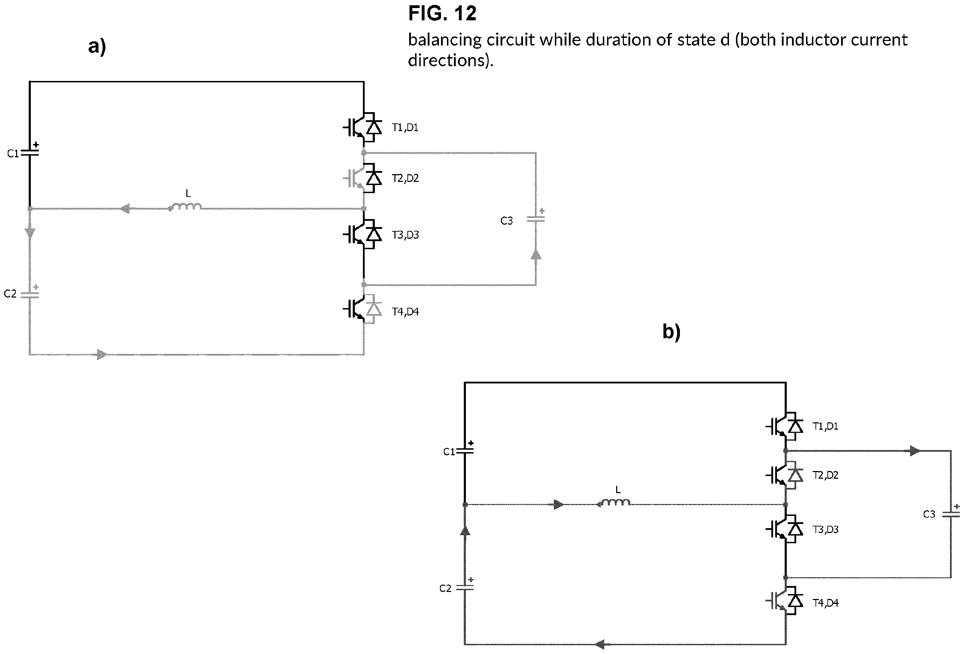

Similarly, in the *state d*, illustrated in figures 12a and 12b (showing both current directions), the second and fourth switches T2 and T4 of the first and second transistor pair respectively are ON (the other switches T1, T3 being off), the voltage across the inductor L equals the difference between the flying capacitor voltage UC3 and the second DC link capacitor voltage *UC2* (*UC3*¬ - UC2) and the flying capacitor current IC3 equals the inductor current *IL.* That means the inductor current *IL* is rising and the flying capacitor C3 is charging for a positive inductor current *IL* (figure 12a) and discharging for a negative inductor current *IL* (figure 12b).

For the above described modulation, each switching cycle includes up to three switching states.

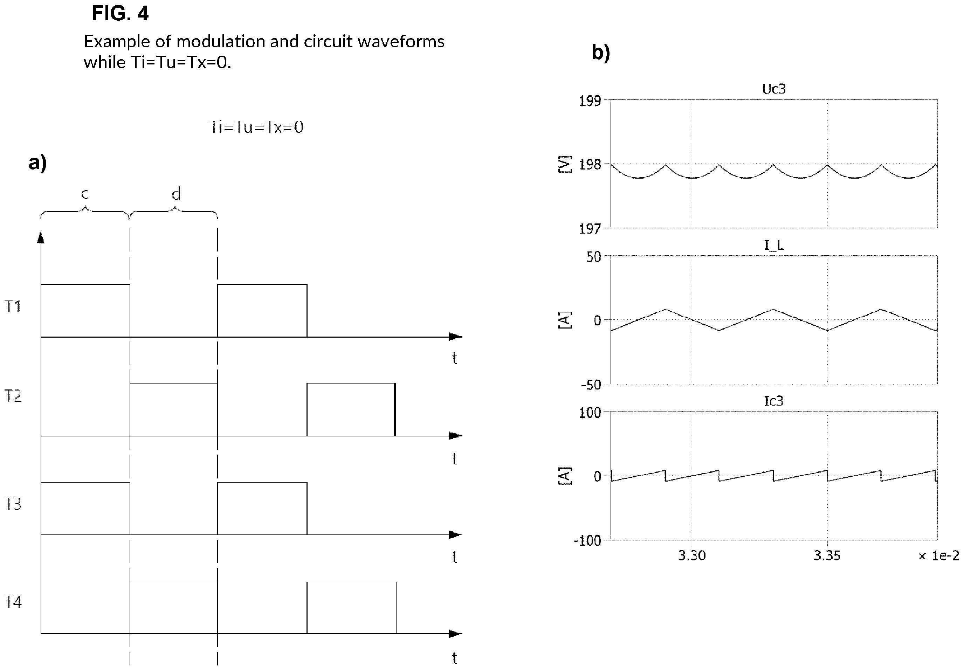

When the two control loops 10, 12 produce zero output signals (Ti=0 , Tu=0), the switching cycle includes two symmetrical states, namely *state c* and *state d* as presented in figure 4.

If the DC voltages are balanced, the average inductor voltage and average flying capacitor current IC3 are zero, so the average values of the inductor current *IL*¬ and flying capacitor voltage UC3 remain unchanged.

When the first control loop 8 produces a non-zero current control signal *Ti* , then *state a* or *state b* are added to the switching sequence.

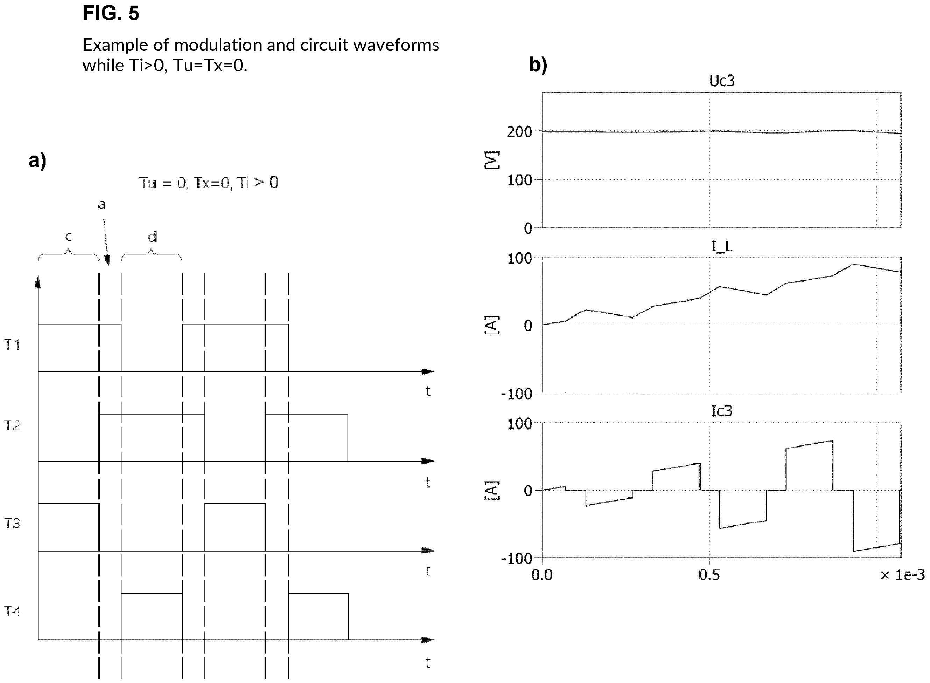

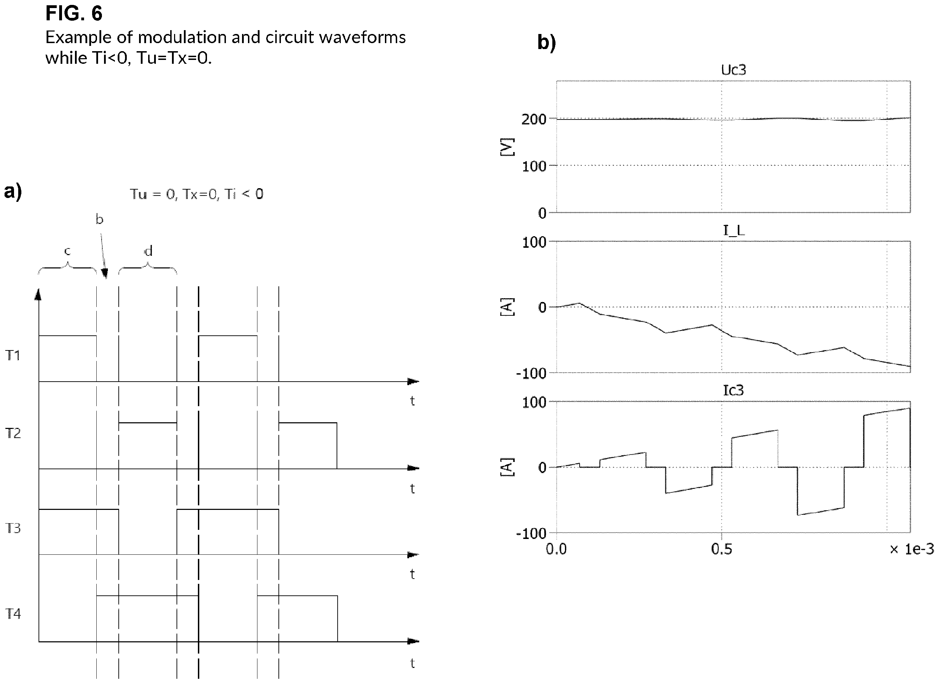

For a positive current control signal *Ti* the inductor current *IL* is increasing as presented in figure 5. For a negative current control signal *Ti,* the inductor current *IL* is decreasing as presented in figure 6.

When the voltage control signal *Tu* is zero, the symmetry between *state* c and *state d* is preserved, so in the ideal case (neglecting losses and measurement inaccuracy), the average value of the flying capacitor voltage UC3 remains unchanged.

When the voltage control signal *Tu* is non-zero the duration times of *state* c and *state d are* different. This means the average value of the flying capacitor current IC3 is non-zero and the capacitor state of charge changes over the switching cycle. The voltage control signal *Tu* determined by the second control loop 10 affects also the average inductor voltage over the switching cycle. This effect is undesirable. Thus, the compensation component signal *Tx,* to overcome this effect, is added to the control process. Due to the compensation circuit arrangement 12, the change of inductor current *IL* is affected only by the current control loop 8.

By adding the compensation component signal the average value of the inductor voltage over the switching cycle might be kept unchanged while the charging/discharging ratio for the flying capacitor C3 is adjusted.

The optimal determination of the time duration of the switching states is an important advantage of the invention.

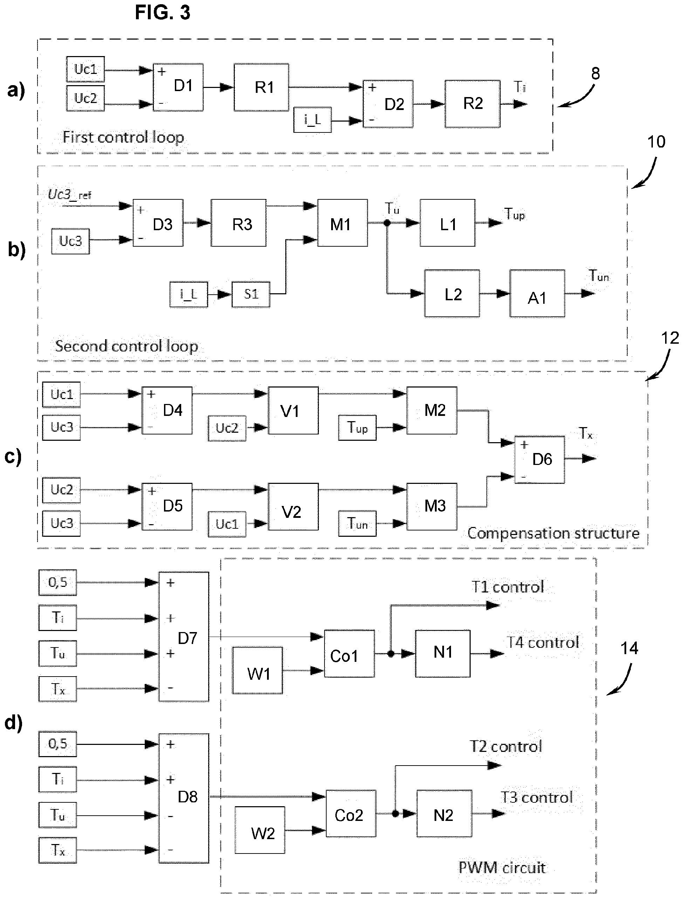

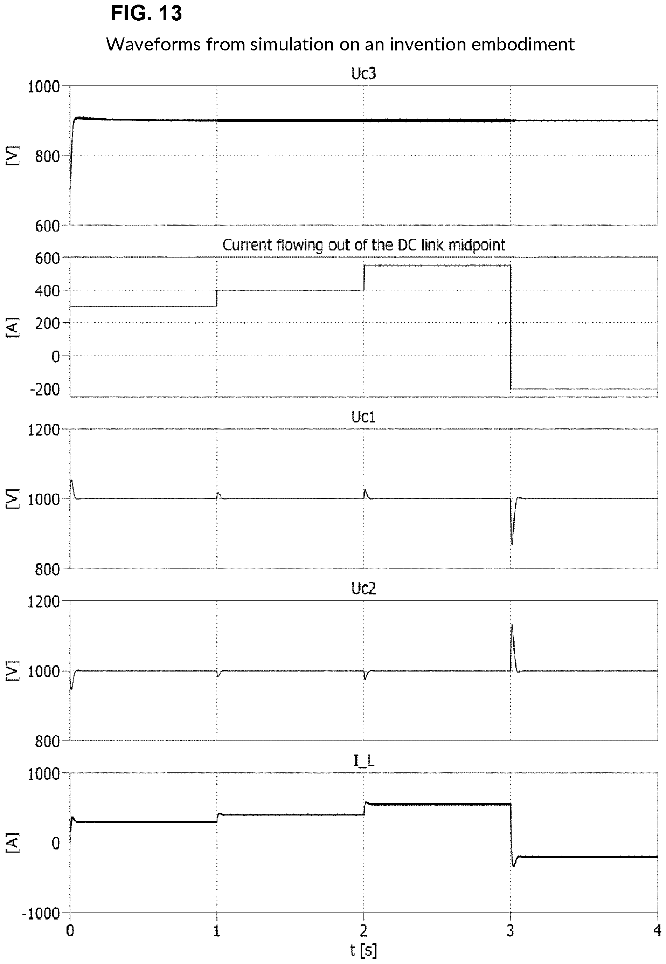

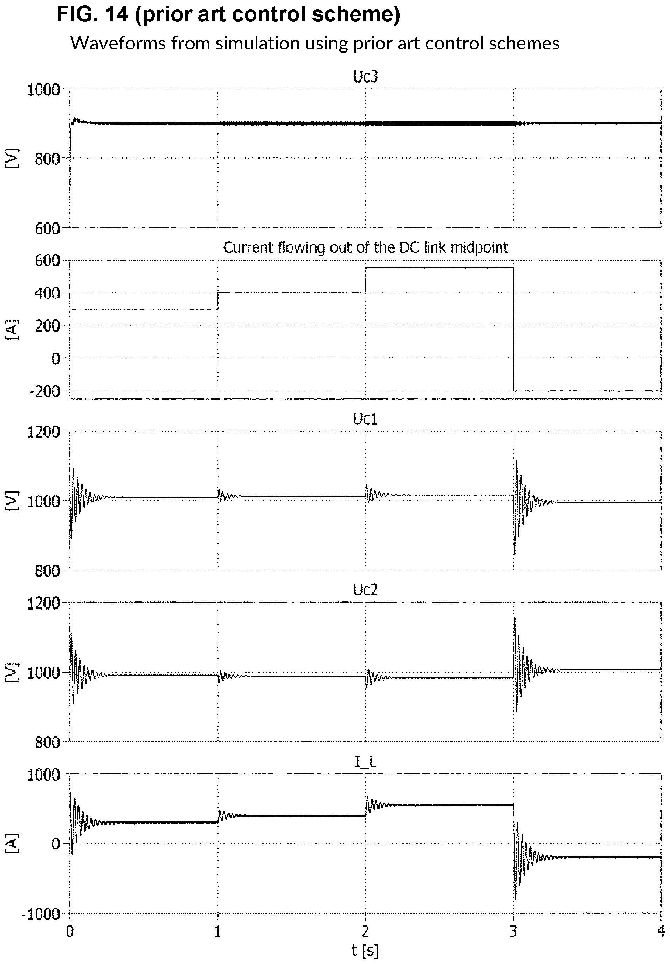

Figure 13 shows plots obtained in simulation study of an embodiment of the invention illustrated in figures 2 and 3. Plots obtained in simulating study of one of the currently existing solutions [Cui, D., & Ge, Q. (2017). A novel hybrid voltage balance method for five-level diode-clamped converters. IEEE Transactions on Industrial Electronics, 65(8)] are presented in figure 14. The initial conditions and circuit parameters are the same in both tests (figure 13 and figure 14). As shown in figure 13, there are high oscillations in presented waveforms. These oscillations can be slightly damped by adding additional resistance in seriers with the inductor L. However, this leads to changing the values of the voltages in the DC link capacitors C1, C2 in the steady state. The waveforms in the proposed invention have substantially no oscillations and the values of the voltages in the DC link capacitors C1, C2 are substantially constant and equal in the steady state.

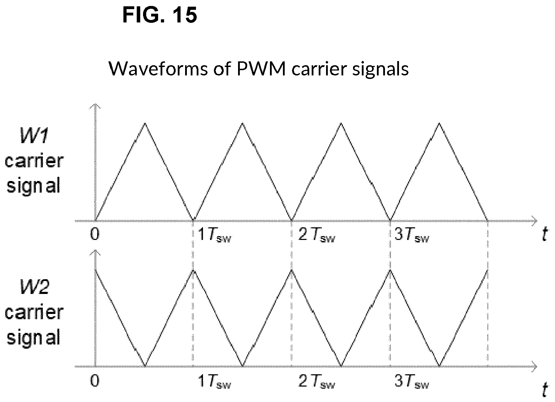

As previously described in relation to figure 3, the duty cycle of transistors T1 and T2 is obtained in subtraction blocks D7 and D8 as a sum of 0.5, the current control signal *Ti,* the negative compensation signal *Tx,* and the positive or negative voltage control signal *Tu,* respectively. Transistor gate signals are generated by a Pulse Width Modulator (PWM) circuit. In the proposed solution the PWM carrier signal generators W1 and W2 generate substantially triangular carrier signals in opposite phase as presented in figure 15. The gate signals for the first and second transistors T1 an T2 are obtained as logic complementary signals to the gate signals for the fourth and third transistors T4 and T3 respectively.

An advantageous aspect of the invention concerns the control method of the balancing circuit with a flying capacitor which allows keeping the DC link voltages and the flying capacitor voltage substantially constant by optimal selection and time determination of switching states in the switching cycle. The control method leads to no or low oscillations, low delays in the control system, and robustness against measurement offset and noise.

The above described control system and methods can be applied not only to three-level NPC converters but also to five and higher level converters. It can be advantageously used in various power electronic applications where the midpoints series-connected capacitors or batteries are accessible, and a voltage unbalance occurs.

### List of references

Power converter system (Drive system) 1
Multi-level inverter 5
Balancing circuit 2
   DC Voltage source Udc
   Link capacitors C1, C2
   Inductor L
   Flying capacitor C3
   Mid-point (Neutral Point NP for a 3 level inverter) 4
   Switches (Transistors) T1, T2, T3, T4
   Transistor pairs mid point 7
Control system 3
   First control path (current control path) 8
      D1 - subtraction block
      **D2** - subtraction block
      **R1** - DC link voltages difference proportional-integral controller
      **R2** - inductor current proportional-integral controller
   Second control path (voltage control path) 10
      **D3** - subtraction block
      **R3** - C3 capacitor voltage proportional-integral controller
      **S1** - realization of the sign function (1 for positive values,-1 for negative values and 0 for 0 value)
      **M1** - multiplication block
      **L1** - saturation block (lower limit 0, upper limit 1)
      **L2** - saturation block (lower limit -1, upper limit 0)
      **A1** - signal amplification
   Compensation control circuit 12
      D4 - subtraction block
      **D5** - subtraction block
      **D6** - subtraction block
      **V1** - division block
      **V2** - division block
      **M2** - multiplication block
      **M3** - multiplication block
   Switch control circuit 14
      **D7** - subtraction block
      **D8** - subtraction block
      **W1** - triangular wave generator
      **W2** - triangular wave generator
      **Co1** - comparison of signals
      **Co2** - comparison of signals
      **N1** - signal negation
      **N2** - signal negation

## Claims

1. A power converter system (1) comprising a DC voltage source (Udc), a control system (3), a multilevel inverter (5) and a balancing circuit (2) connected to the DC voltage source (Udc), and at least two DC link series connected capacitors (C1, C2) connected between a positive and a negative voltage supply line (V+, V-) of the DC voltage source (Udc) and having a mid-point (4) therebetween, the balancing circuit comprising a plurality of switches (T1, T2, T3, T4) connected in series between said positive and a negative voltage supply line (V+, V-), the plurality of switches arranged in a first pair of switches (T1, T2) and a second pair of switches (T3, T4), a flying capacitor (C3) connected between a mid point (5) of the first pair of switches (T1, T2) and a mid point (6) of the second pair of switches (T3, T4), and an inductor (L) connected between said DC link capacitor mid point (4) and a mid point (7) between the first pair of switches (T1, T2) and second pair of switches (T3, T4), **characterized in that** said control system (3) comprises a cascaded control loop including a first control path (8) receiving DC link capacitor voltages (UC1, UC2) as input and outputting a current control signal (Ti), and a second control path receiving a flying capacitor voltage (UC3) as input and outputting a voltage control signal (Tu), the current control signal and voltage control signal being input into a switch control circuit (14) of the control system for controlling operation of the switches of the balancing circuit.

2. The power converter system according to claim 1 wherein the control system (3) further comprises a compensation circuit arrangement (12) receiving a positive voltage control signal (Tup) and a negative voltage control signal (Tun) from the second control path, the compensation circuit arrangement configured to generate a compensation control signal (Tx) for input into the switch control circuit (14).

3. The power converter system according to the preceding claim wherein the second control path (10) comprises a first saturation block (L1) and second saturation block (L2) receiving the voltage control signal (Tu), the first saturation block having a lower limit of 0 and an upper limit of a fixed positive value and the second saturation having an upper limit of 0 and a lower limit of a fixed negative value, the first saturation block outputting a positive compensation voltage control signal (Tup) and the second saturation block outputting a negative compensation voltage control signal (Tun), said positive and negative compensation signals input into the compensation circuit arrangement (12).

4. The power converter system according to any preceding claim wherein the switch control circuit (14) comprises a subtraction block (D7) into which the current control signal (Ti) and voltage control signal (Tu) are added and the compensation control signal (Tx) is subtracted, and a subtraction block (D8), into which the current control signal (Ti) is added and the voltage control signal (Tu) and compensation control signal (Tx) are subtracted.

5. The power converter system according to the preceding claim wherein a reference mean value is inputted in both subtraction blocks (D7, D8).

6. The power converter system according to any preceding claim wherein the gate control circuit (14) further comprises a first comparator (Co1) comparing the output of one of the subtraction blocks (D7) with a first PWM carrier signal (W1) and a second comparator (Co2) comparing the output of the other subtraction block (D8) with a second PWM carrier signal (W2).

7. The power converter system according to the preceding claim wherein the PWM carrier signals have the same frequency and amplitude, and have substantially triangular waveforms, whereby the first carrier signal (W1) is 180° phase shifted from the second PWM carrier signal (W2).

8. The power converter system according to either of the two directly preceding claims wherein the switches are transistors and the output of the comparators (Co1, Co2) constitute transistor gate input signals.

9. The power converter system according to any preceding claim wherein the multi-level inverter is a three-level inverter.
